# EUROPÄISCHE PATENTSCHRIFT

(11) **EP 4 078 106 B1**
(45) Veröffentlichungstag und Bekanntmachung des Hinweises auf die Patenterteilung: **03.01.2024**
(21) Anmeldenummer: 20833877.2
(22) Anmeldetag: 18.12.2020
(51) Int. Cl.: G01F 11/26

(54) **DOSIERVORRICHTUNG SOWIE VERFAHREN ZUR ABGABE EINER FLIESSFÄHIGEN SUBSTANZ**
DOSING DEVICE AND METHOD FOR DISPENSING A FLOWABLE SUBSTANCE
DISPOSITIF DE DOSAGE AINSI QUE PROCÉDÉ DE DISTRIBUTION D'UNE SUBSTANCE COULANTE

(30) Priorität: 18.12.2019 EP 19217748
(43) Veröffentlichungstag der Anmeldung: 26.10.2022
(73) Patentinhaber: Capartis AG, 8200 Schaffhausen (CH)
(72) Erfinder: WOHLGENANNT, Herbert, 8200 Schaffhausen Schaffhausen (CH)
(74) Vertreter: Hepp Wenger Ryffel AG
(86) Internationale Anmeldenummer: PCT/EP2020/087320
(87) Internationale Veröffentlichungsnummer: WO 2021/123380

(56) Entgegenhaltungen:
- WO-A1-2018/211125
- GB-A- 554 474
- US-A- 2 331 659
- US-A- 5 918 781

## Beschreibung

Die Erfindung betrifft eine Dosiervorrichtung sowie ein Verfahren zur Abgabe einer fliessfähigen Substanz.

### Stand der Technik

Eine Dosiervorrichtung zur Abgabe einer kontrollierten Flüssigkeitsmenge ist beispielsweise aus dem Dokument WO2018/080966A1 bekannt. Diese Dosiervorrichtung wird zum Ausgeben einer definierten Flüssigkeitsmenge aus einem Behälter verwendet, wobei der Behälter einen Stutzen aufweist, mit welchem die Dosiervorrichtung durch Aufschrauben verbindbar ist. Diese Dosiervorrichtung weist die Nachteile auf, dass deren Herstellung relativ aufwändig und somit relativ teuer ist, und dass die Dosierung unter gewissen Umständen nicht zufriedenstellend reproduzierbar erfolgt. Zudem wird die Dosis nur dann abgegeben, wenn der Behälter zusammengedrückt wird. Das Dokument US2331659 offenbart eine weitere Dosiervorrichtung. Diese Dosiervorrichtung weist unter anderem die Nachteile auf, dass die abgegebene Flüssigkeitsmenge fest vorgegeben ist und nicht verändert werden kann, und dass die Dosiervorrichtung einen Ventildeckel aufweist, der nach erfolgter Ausgabe der Flüssigkeitsmenge von Hand verschlossen werden muss, sodass die Hand beziehungsweise die Finger beim Schliessen durch allenfalls vorhandene Rückstände der Flüssigkeit verunreinigt werden.

### Darstellung der Erfindung

Aufgabe der Erfindung ist es somit eine vorteilhaftere Dosiervorrichtung zur Abgabe einer kontrollierten Menge einer fliessfähigen Substanz auszugestalten, die insbesondere verbesserte Dosiereigenschaften aufweist. Zudem ist es Aufgabe der Erfindung ein vorteilhafteres Verfahren zur Abgabe einer kontrollierten Menge einer fliessfähigen Substanz auszugestalten.

Diese Aufgabe wird gelöst mit einer Dosiervorrichtung aufweisend die Merkmale von Anspruch 1. Die abhängigen Ansprüche 2 bis 18 betreffen weitere vorteilhafte Ausgestaltungen. Die Aufgabe wird weiter gelöst mit einem Verfahren aufweisend die Merkmale von Anspruch 19. Die abhängigen Ansprüche 20 bis 22 betreffen weitere vorteilhafte Verfahrensschritt.

Die Aufgabe wird insbesondere gelöst mit einer Dosiervorrichtung zur Abgabe einer fliessfähigen Substanz, umfassend eine Kappe aufweisend einen Zuführraum, der Fluid leitend mit einem Behälter oder einer Zufuhr verbindbar ist, sowie umfassend eine Steuerkammer, ein Schliessteil und eine Ausgussöffnung, wobei die Steuerkammer einen Innenraum ausbildet, in welchem das Schliessteil angeordnet ist, wobei das Schliessteil um eine Schwenkachse drehbar gelagert ist, wobei das Schliessteil den Innenraum der Steuerkammer in eine Durchflusskammer und eine Teilsteuerkammer unterteilt, wobei die Durchflusskammer die fliessfähige Substanz leitend mit der Ausgussöffnung verbunden ist, wobei die Steuerkammer eine Austauschöffnung aufweist, über welche der Zuführraum die fliessfähige Substanz leitend mit der Teilsteuerkammer verbunden ist, und wobei die Steuerkammer eine Steuerkammereinlassöffnung aufweist, über welche der Zuführraum, abhängig von der Stellung des Schliessteils, entweder mit der Durchflusskammer oder mit der Teilsteuerkammer die fliessfähige Substanz leitend verbunden ist, und wobei das Schliessteil bis zu einer Stellung drehbar ist, bei welcher die Ausgussöffnung durch das Schliessteil verschlossen ist, was ein weiteres Austreten der fliessfähigen Substanz aus der Ausgussöffnung verhindert.

Vorzugsweise sind die Austauschöffnung, die Steuerkammereinlassöffnung und die Ausgussöffnung in Verlaufsrichtung der Längsachse nacheinander folgend angeordnet.

Die Aufgabe wird weiter insbesondere gelöst mit einem Verfahren zur Abgabe einer fliessfähigen Substanz aus einem Behälter oder einer Zufuhr, wobei eine Dosiervorrichtung, umfassend eine Kappe und eine Steuerkammer, mit dem Behälter oder der Zufuhr verbunden wird, wobei ein schwenkbares Schliessteil in der Steuerkammer angeordnet ist, welches den Innenraum der Steuerkammer in eine Durchflusskammer und eine Teilsteuerkammer unterteilt, indem die zugeführte, fliessfähige Substanz während dem Ausgeben über eine Steuerkammereinlassöffnung der Durchflusskammer zugeführt wird und anschliessend zur Ausgabe einer Ausgussöffnung zugeführt wird, und indem ein Teil der sich im Behälter oder der Zufuhr befindlichen fliessfähigen Substanz, insbesondere eine Flüssigkeit, der Teilsteuerkammer zugeführt wird, sodass das mit der fliessfähigen Substanz gefüllte Volumen der Teilsteuerkammer zunimmt und dadurch das Schliessteil so lange geschwenkt wird, bis dieses an der Ausgussöffnung anliegt, und dadurch die Ausgabe der fliessfähigen Substanz unterbrochen wird.

Die erfindungsgemässe Dosiervorrichtung ist zur Abgabe einer fliessfähigen Substanz geeignet, wobei als fliessfähige Substanz bevorzugt eine Flüssigkeit oder ein Gel verwendet wird, wobei die fliessfähige Substanz auch eine Flüssigkeit enthaltend Feststoffe sein kann, oder auch eine rieselfähige Substanz enthaltend ausschliesslich Feststoffe, insbesondere eine rieselfähige gekörnte Substanz. Die erfindungsgemässe Dosiervorrichtung ist insbesondere zur Abgabe einer fliessfähigen Substanz im Haushalt geeignet, beispielweise zur dosierten Abgabe von Wasser, flüssigem Waschmittel, Weichspüler, Geschirrspülmittel, Putzmittel, Getränken, Ölen, Kondensmilch, Rahm oder Körperpflegeprodukten wie Gesichtscreme.

Die erfindungsgemässe Dosiervorrichtung wird vorzugsweise auf einen Stutzen eines Behälters aufgesetzt, beispielsweise durch Aufschrauben oder Aufprellen, wobei der Behälter zur dosierten Abgabe der fliessfähigen Substanz vorzugsweise gestürzt wird, sodass die sich im Behälter befindliche fliessfähige Substanz über die Dosiervorrichtung in einer dosierten Portion ausgegeben wird. Zur Abgabe einer weiteren dosierten Portion wird der Behälter vorzugsweise vollständig aufgerichtet, damit die Dosiervorrichtung wieder eine Ausgangslage einnehmen kann und das schwenkbare Schliessteil wieder in eine Ausgangslage bewegt wird, wobei der Behälter danach wieder gestürzt wird, und danach eine weitere dosierte Portion der fliessfähigen Substanz ausgegeben wird. Der Behälter ist vorzugsweise als ein Kunststoffbehälter ausgestaltet, wobei dieser auch als starrer Behälter oder als elastisch verformbarer Behälter ausgestaltet sein kann. In einem vorteilhaften Verfahrensschritt wird der elastisch verformbare Behälter kurz vor der Ausgabe der fliessfähigen Substanz oder während der Ausgabe der fliessfähigen Substanz zusammengedrückt, sodass die fliessfähige Substanz im Behälter unter Druck steht, und die fliessfähige Substanz dadurch beispielsweise schneller ausgegeben wird, oder die fliessfähige Substanz bei unterschiedlichen Stellungen des Behälters ausgegeben werden kann. Der Behälter kann auch schlauchartig ausgestaltet sein, wobei die Dosiervorrichtung mit dem schlauchartigen Behälter verbunden ist. Die Dosiervorrichtung kann auch mit einer Zufuhr, beispielsweise einem Schlauch, verbunden sein, über welche eine fliessfähige Substanz wie eine Flüssigkeit zugeleitet wird, wobei der Schlauch vorzugsweise mit einem Tankbehälter verbunden ist. Eine dosierte Abgabe der über die Zufuhr zugeleiteten fliessfähigen Substanz erfolgt ähnlich wie mit einem Behälter, indem die mit der Zufuhr verbundene-Dosiervorrichtung gestürzt oder unter Druck gesetzt wird, sodass die zugeleitete fliessfähige Substanz über die Dosiervorrichtung in einer dosierten Portion ausgegeben wird. Daraufhin wird die Dosiervorrichtung vorzugsweise vollständig aufgerichtet, damit die Dosiervorrichtung, insbesondere das schwenkbare Schliessteil, wieder eine Ausgangslage einnehmen kann, wobei die Dosiervorrichtung danach wieder gestürzt wird, und danach eine weitere dosierte Portion der fliessfähigen Substanz ausgegeben wird.

Die erfindungsgemässe Dosiervorrichtung weist den Vorteil auf, dass diese in der einfachsten Ausführungsform aus nur drei Teilkomponenten besteht, nämlich einer Kappe, einem Einstell- oder Abdeckelement sowie einem Schliessteil, welche zusammengefügt die Dosiervorrichtung ergeben. Diese drei Teilkomponenten werden vorzugsweise durch Spritzgiessen hergestellt, wobei die derart hergestellten Spritzgussteile als geometrisch einfache Formteile ausgestaltet sind, sodass sowohl die Herstellung der zum Spritzen erforderlichen Werkzeuge als auch die Herstellung der Spritzgussteile sehr kostengünstig erfolgen kann. Die erfindungsgemässe Dosiervorrichtung weist den weiteren Vorteil auf, dass die drei Teilkomponenten auf sehr einfache Weise und vorzugsweise automatisiert zur erfindungsgemässen Dosiervorrichtung zusammenbaubar sind, sodass diese Dosiervorrichtung sehr kostengünstig herstellbar ist. Zudem ist zu deren Herstellung eine geringe Menge Kunststoff erforderlich, was die Vorteile ergibt, dass die erforderliche Kunststoffmenge kostengünstig ist, und dass nach dem Gebrauch der Dosiervorrichtung eine geringere Menge Abfall entsteht. Der äusserst einfache Aufbau der erfindungsgemässen Dosiervorrichtung ermöglicht es diese langfristig und mehrfach zu verwenden, da die Dosiervorrichtung problemlos auseinandergebaut, gereinigt und wieder zusammengebaut werden kann und deren Funktion somit langfristig gewährleistet ist. Diese Mehrfachverwendbarkeit der Dosiervorrichtung wird insbesondere von umweltbewussten Kunden als ein Mehrwert erachtet, da ein Behälter mit einem einfachen Verschluss gekauft werden kann und der Verschluss nach dem Öffnen des Behälters durch die Dosiervorrichtung ausgetauscht werden kann.

Die erfindungsgemässe Dosiervorrichtung weist zudem den Vorteil auf, dass die Dosierung wiederholbar zuverlässig erfolgt. Die im Dokument WO2018/080966A1 offenbarte Anordnung umfasst einen linear beweglich angeordneten Kolben. Da dieser frei im Zylinder beweglich ist ergeben sich die Nachteile, dass die Bewegung des Kolbens behindert werden kann, beispielsweise indem sich der Kolben im Zylinder verkantet, indem eine sich im Kolben befindliche Flüssigkeit die Bewegung behindert, oder indem an der Kolbenwand angelagerte Rückstände wie eine eingetrocknete Flüssigkeit eine Bewegung behindern oder verhindern. Die erfindungsgemässe Dosiervorrichtung weist den Vorteil auf, dass das bewegliche Schliessteil um eine Achse drehbar gelagert ist, und vorzugsweise in der Kappe gelagert ist, sodass das Schliessteil bezüglich der Kappe eine definierte Lage aufweist. Besonders vorteilhaft ist eine Ausgestaltung, bei welcher die Achse ein Teil des Schliessteils ist und das Lager ein Teil der Kappe ist, sodass das Schliessteil genau definiert bezüglich der Kappe und der sich in der Kappe befindlichen Steuerkammer angeordnet ist, sodass das Schliessteil entlang der gesamten möglichen Schwenkbewegung eine definierte Lage bezüglich den Begrenzungswänden der Steuerkammer aufweist. Vorzugsweise ist die Achse derart in der Kappe gelagert, dass die Achse nur ein sehr geringes Spiel aufweist, insbesondere in Verlaufsrichtung der Achse, um dadurch einerseits eine Berührung des Schliessteils mit den seitlichen Begrenzungswänden der Steuerkammer zu vermeiden, und um andererseits sicherzustellen, dass die Spaltbreite zwischen Schliessteil und Begrenzungswänden gering bleibt, und beispielsweise im Bereich zwischen 0,2 bis 1 mm liegt. Die im Dokument WO2018/080966A1 offenbarte Anordnung weist zudem den Nachteil auf, dass eine Dosis nur dann abgegeben wird, wenn der Behälter zusammengedrückt wird. Die erfindungsgemässe Dosiervorrichtung kann auch ohne Zusammendrücken eines Behälters eine Dosis abgeben. Um dies zu ermöglichen weist die erfindungsgemässe Dosiervorrichtung vorteilhafterweise ein Belüftungsrohr auf, welches vorzugsweise einen Luftaustausch zwischen dem Behälteraussenraum und dem Behälterinnenraum ermöglicht.

Die im Dokument WO 2018/080966A1 offenbarte Anordnung weist zudem den Nachteil auf, dass sich der Kolben beim erstmaligen Dosieren in einem trockenen Zustand befindet, da dieser vor der ersten Ausgabe noch nie mit der auszugebenden fliessfähigen Substanz in Kontakt gelangt ist. Dies hat zur Folge, dass die erste von der Dosiervorrichtung abgegebene Dosis zu klein ausfallen kann, da der Kolben in trockenem Zustand beim Stürzen des Behälters durch die einwirkende Schwerkraft bewegt werden kann und sich dieser deshalb unmittelbar nach dem Stürzen nicht mehr in der vorgesehenen Ausgangsposition befindet, was zur Folge hat, dass die dabei abgegebene Menge an fliessfähiger Substanz zu gering ausfällt. Diese offenbarte Anordnung weist somit eine reduzierte Genauigkeit beziehungsweise eine reduzierte Reproduzierbarkeit der abgegebenen Dosiermenge auf.

Die erfindungsgemässe Vorrichtung ist zur dosierten Abgabe von fliessfähigen Substanzen geeignet, insbesondere zur dosierten Abgabe von Flüssigkeiten wie beispielsweise Wasser, flüssiges Waschmittel, Weichspüler, Geschirrspülmittel, Putzmittel, Getränke, Öl, oder Kondensmilch. Die erfindungsgemässe Vorrichtung ist jedoch auch zur dosierten Abgabe von festen fliessfähigen Substanzen wie beispielsweise Granulate geeignet. Die erfindungsgemässe Vorrichtung ist somit beispielsweise zur Abgabe von Substanzen wie Pflanzenschutzmitteln oder Düngemitteln geeignet.

Der hierin verwendete Begriff "Dosis" ist definiert als die gemessene Menge der fliessfähigen Substanz, nachfolgend als Flüssigkeit bezeichnet, die von der Dosiervorrichtung abgegeben wird. Die Dosis beginnt, wenn die Flüssigkeit zum ersten Mal aus der Ausgussöffnung austritt, und endet, wenn der aus der Ausgussöffnung ausfliessende Strom der Flüssigkeit zum Stillstand kommt. Das Flüssigkeitsvolumen, das jeweils dosiert wird, beträgt typischerweise 1 ml bis 200 ml, vorzugsweise 3 ml bis 50 ml, bevorzugter 10 ml bis 30 ml und noch bevorzugter 15 ml bis 30 ml.

Die erfindungsgemässe Dosiervorrichtung ist zur Anwendung in Kombination mit starren Behältern als auch mit elastisch zusammendrückbaren Behältern geeignet, wobei unter «elastisch zusammendrückbaren» Behältern ein Behälter verstanden wird, der in seine ursprüngliche Form zurückkehrt, ohne eine dauerhafte Verformung zu erleiden, sobald der Druck nachlässt. Vorteilhafterweise erlaubt die erfindungsgemässe Dosiervorrichtung eine Dosismenge zu dosieren, die bezüglich einer vorgegebenen Soll-Dosis eine Abweichung von weniger als 10% aufweist, die in Abhängigkeit der Art der Flüssigkeit auch kleiner oder grösser sein kann.

Die erfindungsgemässe Dosiervorrichtung eignet sich insbesondere für den Hausgebrauch oder den Haushalt, beispielsweise für Reinigungsmittel wie z.B. harte Oberflächenreinigungsmittel, flüssige Waschmittelzusammensetzungen oder andere Reinigungsmittel, wie Weichspüler und dergleichen. Weitere Anwendungsgebiete sind Dosiervorrichtungen für manuelle und maschinelle Geschirrspülmittel oder Haarpflegeprodukte, oder Getränke wie Sirupe, Spirituosen, Alkohole, flüssige Kaffeekonzentrate und dergleichen, oder Lebensmittelanwendungen wie Lebensmittelpasten und flüssige Lebensmittelzutaten.

Die dosierte Flüssigkeit ist vorzugsweise eine Reinigungsmittelzusammensetzung. Die dosierte Flüssigkeit kann eine newtonsche Flüssigkeit oder eine Scherverdünnung sein. Unter Scherverdünnung ist gemeint, dass die genannte Flüssigkeit nicht-newtonisch ist und vorzugsweise eine Viskosität aufweist, die sich mit Änderungen der Scherrate ändert. Die Viskosität der Flüssigkeit kann von 1 bis 350mPa·s, vorzugsweise von 1 bis 300mPa·s, vorzugsweise von 1 bis 250 mPa·s, noch bevorzugter von 1 bis 220 mPa·s, noch bevorzugter von 1 bis 200mPa·s und am bevorzugtesten von 1 bis 150mPa·s (gemessen bei 20°C) betragen.

Vorteilhafterweise umfasst die erfindungsgemässe Dosiervorrichtung ein Einstellelement, vorzugsweise ein Einstellelement, mit welchem die von der Dosiervorrichtung abgegebene Menge an fliessfähiger Substanz je nach Erfordernis einstellbar ist. Es kann sich jedoch auch als vorteilhaft erweisen die Dosiervorrichtung derart auszugestalten, dass diese nur eine fest vorgegebene Menge an fliessfähiger Substanz ausgibt, indem auf das einstellbare Einstellelement verzichtet wird.

Die Erfindung wird nachfolgend an Hand mehrerer Ausführungsbeispiele beschrieben.

### Kurze Beschreibung der Zeichnungen

Die zur Erläuterung der Ausführungsbeispiele verwendeten Zeichnungen zeigen:
- Fig. 1: eine perspektivische Ansicht eines ersten Ausführungsbeispiels einer Dosiervorrichtung von oben;
- Fig. 2: eine perspektivische Ansicht der Dosiervorrichtung von unten;
- Fig. 3: eine Stirnansicht der Dosiervorrichtung von oben;
- Fig. 4: eine perspektivische Ansicht der Dosiervorrichtung von oben, teilweise im Längsschnitt;
- Fig. 5: eine weitere perspektivische Ansicht der Dosiervorrichtung von oben, teilweise im Längsschnitt;
- Fig. 6: eine perspektivische Ansicht einer Kappe der Dosiervorrichtung von oben;
- Fig. 7: einen Längsschnitt durch die Kappe gemäss Fig. 6 entlang der Schnittlinie A-A;
- Fig. 8: eine Ansicht der Kappe gemäss Fig. 6 von unten;
- Fig. 9: eine perspektivische Ansicht der Kappe gemäss Fig. 6 von unten;
- Fig. 10: eine perspektivische Ansicht eines Einstellelements der Dosiervorrichtung von oben;
- Fig. 11: einen Längsschnitt durch das Einstellelement gemäss Fig. 10 entlang der Schnittlinie B-B;
- Fig. 12: eine perspektivische Ansicht des Einstellelements gemäss Fig. 10 von unten;
- Fig. 13: eine perspektivische Ansicht eines Schliessteils von oben;
- Fig. 14: eine perspektivische Ansicht des Schliessteils gemäss Fig. 13 von unten;
- Fig. 15: eine Ansicht einer vollständig geöffneten Steuerkammereinlassöffnung der Kappe;
- Fig. 16: eine Ansicht der nur teilweise geöffneten Steuerkammereinlassöffnung der Kappe;
- Fig. 17: einen Längsschnitt durch die Dosiervorrichtung entlang der Schnittlinie C-C gemäss Figur 3 mit vollständig geöffneter Steuerkammereinlassöffnung;
- Fig. 18: einen Längsschnitt durch die Dosiervorrichtung entlang der Schnittlinie C-C mit geschlossener Steuerkammereinlassöffnung;
- Fig. 19: einen Längsschnitt durch die Dosiervorrichtung entlang der Schnittlinie C-C zu Beginn des Ausgiessens einer Flüssigkeit;
- Fig. 20: einen Längsschnitt durch die Dosiervorrichtung entlang der Schnittlinie C-C während des Ausgiessens der Flüssigkeit;
- Fig. 21: einen Längsschnitt durch die Dosiervorrichtung entlang der Schnittlinie C-C nach Abschluss des Ausgiessens der Flüssigkeit;
- Fig. 22: eine perspektivische Ansicht der Unterseite eines weiteren Ausführungsbeispiels einer Kappe;
- Fig. 23: einen Längsschnitt durch die Kappe gemäss Figur 22 entlang der Schnittlinie D-D;
- Fig. 24: eine perspektivische Ansicht eines weiteren Ausführungsbeispiels eines Einstellelementes;
- Fig. 25: eine perspektivische Ansicht des Einstellelements gemäss Figur 24 von unten;
- Fig. 26: einen Längsschnitt durch das Einstellelement gemäss Figur 24;
- Fig. 27: einen Längsschnitt durch die Kappe gemäss Figur 22 entlang der Schnittlinie E-E;
- Fig. 28: eine perspektivische Ansicht eines weiteren Ausführungsbeispiels einer Dosiervorrichtung;
- Fig. 29: einen Längsschnitt durch die Dosiervorrichtung gemäss Fig. 28.

Grundsätzlich sind in den Zeichnungen gleiche Teile mit gleichen Bezugszeichen versehen.

### Wege zur Ausführung der Erfindung

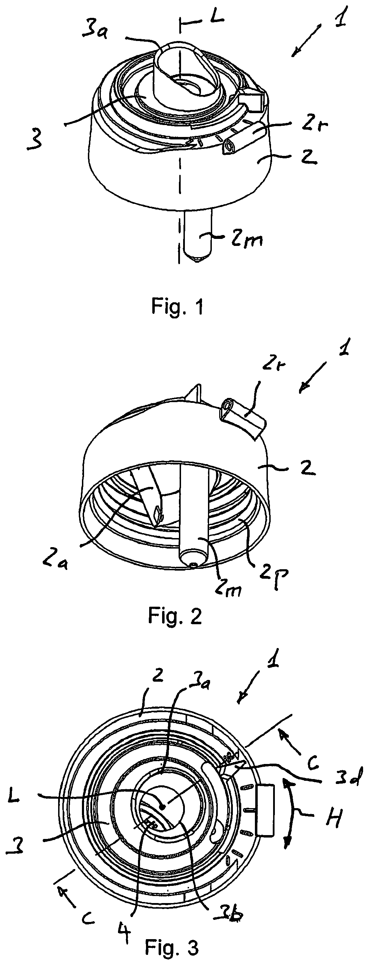

Die Figuren 1 bis 14 und 17 bis 21 zeigen an Hand eines ersten Ausführungsbeispiels dieselbe Dosiervorrichtung 1 und deren Teile aus unterschiedlichen Perspektiven, mit unterschiedlichen Schnitten und bei unterschiedlichen Zuständen. Die Figuren 1 bis 3 zeigen die zusammengebaute Dosiervorrichtung 1 aus unterschiedlichen Ansichten. Die Dosiervorrichtung 1 umfasst eine an einem nicht dargestellten Behälter befestigbare Kappe 2 umfassend ein Innengewinde 2p, eine Steuerkammer 2a sowie ein optionales Belüftungsrohr 2m, wobei die Kappe 2 bzw. die Dosiervorrichtung 1 eine Längsachse L aufweist, welche konzentrisch bezüglich dem Innengewinde 2p verläuft. Die Dosiervorrichtung 1 umfasst zudem ein Einstellelement 3 mit einer Ausgussöffnung 3b und einem Ausguss 3a. Das Einstellelement 3 ist drehbar in der Kappe 2 gelagert und ist in einer Bewegungsrichtung H bezüglich der Kappe 2 hin- und her verdrehbar. Vorteilhafterweise fällt das Drehzentrum des Einstellelementes 3 mit der Längsachse L zusammen. In einer weiteren Ausführungsform könnte das Drehzentrum des Einstellelementes 3 jedoch auch exzentrisch bezüglich der Längsachse L angeordnet sein. In einer vorteilhaften Ausgestaltung umfasst das Einstellelement 3 zudem einen Zeiger 3d, sodass die Stellung der gegenseitigen Verdrehung von Einstellelement 3 und Kappe 2 optisch einfach erkennbar ist. Besonders bevorzugt ist an der Kappe 2 eine Skala 2o angeordnet, beispielsweise eine Zahlenskala, entlang welcher der Zeiger 3d beweglich angeordnet ist, sodass der Zeiger 3d beispielsweise reproduzierbar an dieselbe Stelle verschoben werden kann. Wie nachfolgend im Detail noch erläutert wird über die Stellung des Zeigers 3d die Menge der abgegebenen Dosis eingestellt. In der Draufsicht gemäss Figur 3 ist zudem noch das sich innerhalb der Steuerkammer 2a befindliche Schliessteil 4 erkennbar.

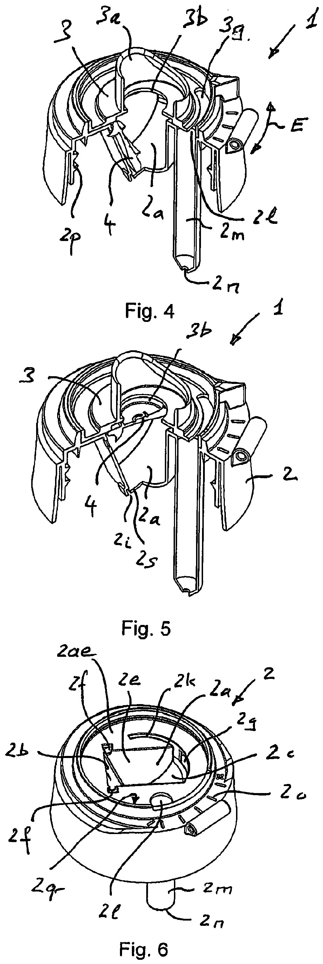

Die Figuren 4 und 5 zeigen einen Längsschnitt durch die Dosiervorrichtung 1. Figur 4 zeigt die Kappe 2 mit der Steuerkammer 2a, dem Innengewinde 2p, sowie dem Belüftungsrohr 2m mit Belüftungseintrittsöffnung 21 und Belüftungsaustrittsöffnung 2n. Das Einstellelement 3 umfasst den Ausguss 3a sowie die Ausgussöffnung 3b, und umfasst zudem eine bezüglich der Längsachse L in Umfangsrichtung H verlaufende Belüftungsöffnung 3g, welche derart bezüglich der Belüftungseintrittsöffnung 21 angeordnet ist, dass die Belüftungseintrittsöffnung 21 bei jeder Drehstellung des Einstellelementes 3 eine Fluid leitende Verbindung zur Umgebungsluft aufweist, um dadurch über das Belüftungsrohr 2m und die Belüftungsaustrittsöffnung 2n Umgebungsluft mit dem Innenraum des Behälters auszutauschen. Das Schliessteil 4 ist schwenkbar an der Kappe 2 gelagert, und befindet sich in Figur 4 in einer Ausgangsstellung, bei welcher die Ausgussöffnung 3b vollständig geöffnet ist, und befindet sich in Figur 5 in einer Endstellung, bei welcher die Ausgussöffnung 3b durch das daran anliegende Schliessteil 4 geschlossen ist.

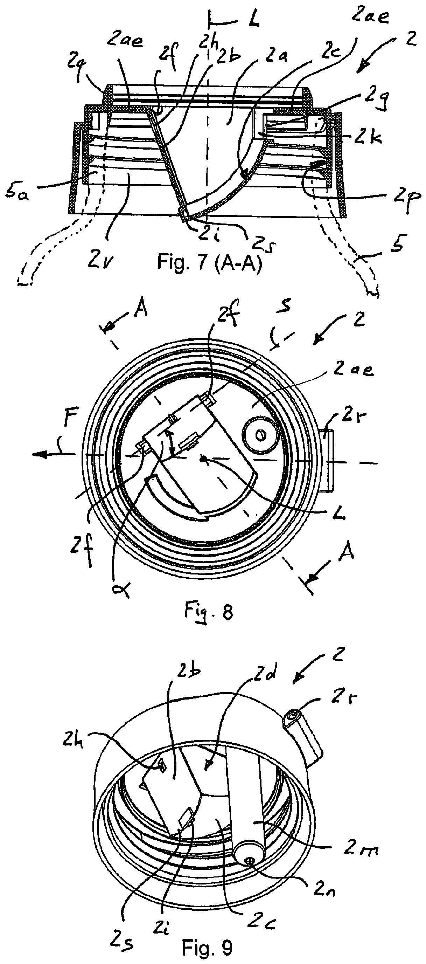

Die Figuren 6 bis 9 zeigen dieselbe Kappe 2 aus unterschiedlichen Ansichten. Die Kappe 2 umfasst eine Stirnwand 2ae, eine Steuerkammer 2a, welche innerhalb der Kappe 2 durch eine erste Begrenzungswand 2b, eine zweite Begrenzungswand 2c sowie eine erste und eine zweite Seitenwand 2d, 2e begrenzt ist, wogegen die Steuerkammer 2a an der Stirnseite der Kappe 2 offen ist. Die Kappe 2 umfasst vorzugsweise zudem zwei gegenseitig beabstandete Drehlager 2f, in welchen das Lagerteil des Schliessteils 4 drehbar gelagert ist. Die Drehlager 2f sind vorzugsweise in der Stirnwand 2ae eingelassen. Die erste Begrenzungswand 2b ist eben verlaufend ausgestaltet, wogegen die zweite Begrenzungswand 2c konzentrisch bezüglich der durch die Drehlager 2f definierten Achse S verläuft. Die erste und die zweite Seitenwand 2d, 2e sind gegenseitig parallel verlaufend ausgestaltet. Die Steuerkammer 2a umfasst eine Steuerkammerbasis 2s bei welcher, bei aufrechter Kappe 2 vorzugsweise an der untersten Stelle, eine erste Austauschöffnung 2i angeordnet ist, welche eine Fluid leitende Verbindung vom Zuführraum 2v zum Innenraum der Steuerkammer 2a ausbildet. Die Steuerkammer 2a umfasst vorteilhafterweise zudem eine in der ersten Begrenzungswand 2b angeordnete zweite Austauschöffnung 2h, welche ebenfalls eine Fluid leitende Verbindung zum Innenraum der Steuerkammer 2a ausbildet. Die zweite Begrenzungswand 2c weist nachfolgend dem der Steuerkammerbasis 2s gegenüber liegenden Endabschnitt eine Steuerkammereinlassöffnung 2g auf. Die Kappe 2 umfasst vorzugsweise an deren Stirnseite ein kreisförmig verlaufendes, über die Stirnseite vorstehendes erstes Führungsteil 2q, das vorzugsweise symmetrisch zur Längsachse L angeordnet ist, und welches das Einstellelement 3 führt und aussen in Umfangsrichtung umschliesst, sodass dieses um die Längsachse L rotierbar in der Kappe 2 gelagert ist. Die erste Austauschöffnung (2i), die Steuerkammereinlassöffnung (2g) und die Ausgussöffnung (3b) sind, wie insbesondere aus Figur 7 ersichtlich, in Richtung der Längsachse (L) nacheinander folgend angeordnet.

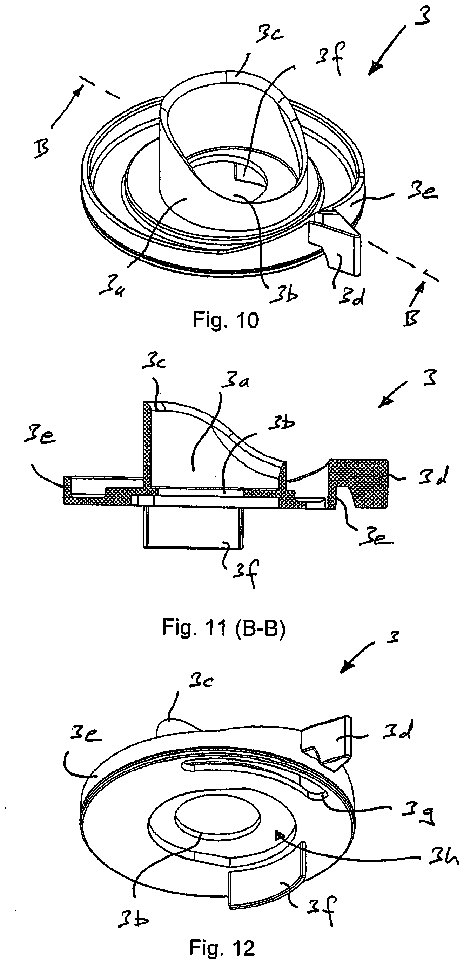

Die Figuren 10 bis 12 zeigen das Einstellelement 3 aus unterschiedlichen Ansichten. Das Einstellelement 3 umfasst ein kreisförmig verlaufendes zweites Führungsteil 3e, welches in das erste Führungsteil 2q der Kappe 2 einführbar ist, damit dieses in der Kappe 2 gehalten ist. Das Einstellelement 3 umfasst die Ausgussöffnung 3b, den Ausguss 3a, einen Schnabel 3c sowie den Zeiger 3d. Das Einstellelement 3 umfasst zudem die Belüftungsöffnung 3g, einen Einstellelementverschluss 3f sowie eine Anschlagfläche 3h. Der Einstellelementverschluss 3f ist Teil des Einstellelementes 3, sodass dieser, bei in der Kappe 2 eingesetztem Einstellelement 3, ebenfalls um die Längsachse L drehbar ist. Figur 6 zeigt einen Seitenraum 2k, wobei der Einstellelementverschluss 3f derart drehbar in Einstellelement 3 angeordnet ist, dass dieser die Steuereinlassöffnung 2g gar nicht, teilweise oder vollständig bedecken und somit verschliessen kann. Das Einstellelement-3 kann um die Längsachse L gedreht werden, sodass der Einstellelementverschluss 3f in den Seitenraum 2k hinein verschoben werden kann und zumindest teilweise oder auch vollständig in den Seitenraum 2k zu liegen kommt, sodass die Steuereinlassöffnung 2g entweder nur noch teilweise durch den Einstellelementverschluss 3f bedeckt ist oder vollständig geöffnet ist. In Figur 7 ist die Öffnung des Seitenraums 2k in einer Stirnansicht dargestellt, wobei zudem die daran anschliessende Steuerkammereinlassöffnung 2g sichtbar ist. Figur 7 zeigt zudem andeutungsweise einen Behälter 5 umfassend einen Behälterstutzen 5a, an welchem die Kappe 2 und somit die gesamte Dosiervorrichtung 1 befestigt ist. Die Kappe 2 umfasst einen Zuführraum 2v, über welchen die sich in dem Behälter 5 befindliche Flüssigkeit in die Kappe 2 strömt, wobei der Zuführraum 2v durch die Steuerkammer 2a von der Ausgussöffnung 3b des Einstellelementes 3 getrennt ist, wobei die Steuerkammer 2a Durchtrittsöffnungen aufweist, insbesondere die erste Austauschöffnung 2i und die Steuerkammereinlassöffnung 2g, um die sich im Behälter 5 befindliche Flüssigkeit auf kontrollierte Weise der Ausgussöffnung 3b zuzuführen.

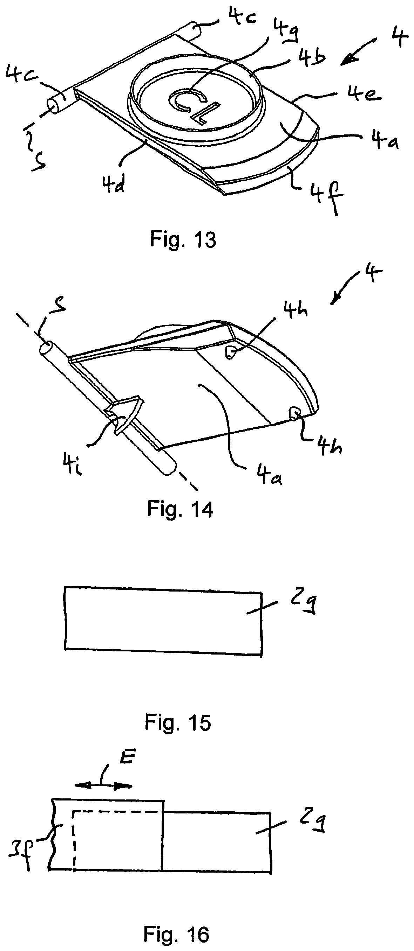

Die Kappe 2 umfasst vorzugsweise ein Gelenksteil 2r, an welchem eine nicht dargestellte, schwenkbare Abdeckkappe befestigt werden kann, um die Stirnseite der Dosiervorrichtung 1 nach deren Gebrauch durch die Abdeckkappe zu bedecken beziehungsweise zu verschliessen. Vorzugsweise ist der Ausguss 3a, wie beispielsweise in Figur 1 dargestellt, an einer bezüglich dem Gelenksteil 2r abgewandten Seite angeordnet, sodass der Behälter 5 während dem Dosieren und Ausgiessen derart gestürzt beziehungsweise rotiert wird, dass der Ausguss 3a nach unten gesenkt wird, und das Gelenkteil 2r und die daran allenfalls befestigte Abdeckkappe nach oben gehoben wird, sodass die Abdeckkappe das Ausgiessen nicht behindert. Figur 8 zeigt mit der Ausgiesslinie F eine bevorzugte Ausgiessrichtung bzw. Schwenkrichtung, in welche die Dosiervorrichtung 1 geschwenkt beziehungsweise gestürzt werden kann. Wie aus Figur 8 ersichtlich, definieren die beiden Drehlager 2f eine Schwenkachse S, um welche das in den Figuren 13 und 14 dargestellte Schliessteil 4 schwenkbar gelagert ist. Die Schwenkachse S weist, wie in Figur 8 dargestellt, einen Winkel α bezüglich der Ausgiesslinie F auf. Dieser Winkel liegt vorzugsweise in einem Bereich zwischen 0° und 90°, bevorzugt zwischen 5° und 75°, und besonders bevorzugt zwischen 5° und 30°.

Der beschriebene Nachteil des Standes der Technik, dass sich die Dosiervorrichtung beim erstmaligen Dosieren in einem trockenen Zustand befindet, und die Dosiervorrichtung deshalb auf Grund der einwirkenden Schwerkraft eine zu kleine Menge der fliessfähigen Substanz abgibt, kann durch eine geschickte Wahl des vorhin beschriebenen Winkels α vermieden werden, indem der Winkel α besonders bevorzugt einen Wert im Bereich zwischen 5° und 30° aufweist, abhängig beispielsweise von der Viskosität der Flüssigkeit. Durch eine entsprechende Wahl des Winkels α kann der Einfluss der Schwerkraft auf das Schliessteil 4 reduziert und vorzugsweise zumindest näherungsweise kompensiert werden, sodass auch die erste abgegebene Dosis, bei welcher sich die erfindungsgemässe Dosiervorrichtung vorerst in einem trockenen Zustand befindet, zumindest annäherungsweise der nachfolgenden, abzugebenden Dosismengen entspricht. Durch eine entsprechende Wahl des Winkels α kann die auf das Schliessteil 4 wirkende Drehmomentkraft beeinflusst werden, wobei der Winkel α vorzugsweise derart gewählt wird, dass sich das Schliessteil 4 beim erstmaligen Ausgiessen, bei welchem sich das Schliessteil 4 zu Beginn noch in einem trockenen Zustand befindet, nicht zu schnell verschwenkt, und sich insbesondere nicht unabhängig von der in die Teilsteuerkammer 2u einfliessende fliessfähige Substanz verschwenkt.

Das in den Figuren 13 und 14 dargestellte Schliessteil 4 umfasst ein Schwenkteil 4a und eine daran befestigte Welle 4c, sodass das Schwenkteil 4a über die Welle 4c um die Schwenkachse S drehbar in den Drehlagern 2f der Kappe 2 gelagert ist. Das Schliessteil 4 umfasst zudem ein Verschlussteil 4b, eine erste Längsseite 4d, eine zweite Längsseite 4e, eine Stirnseite 4f, ein Abstützteil 4h, einen Fortsatz 4i und optional eine Beschriftung 4g. Das Schliessteil 4 ist vorzugsweise einteilig ausgestaltet, sodass die Welle 4c ein Teil des Schliessteils 4 ist.

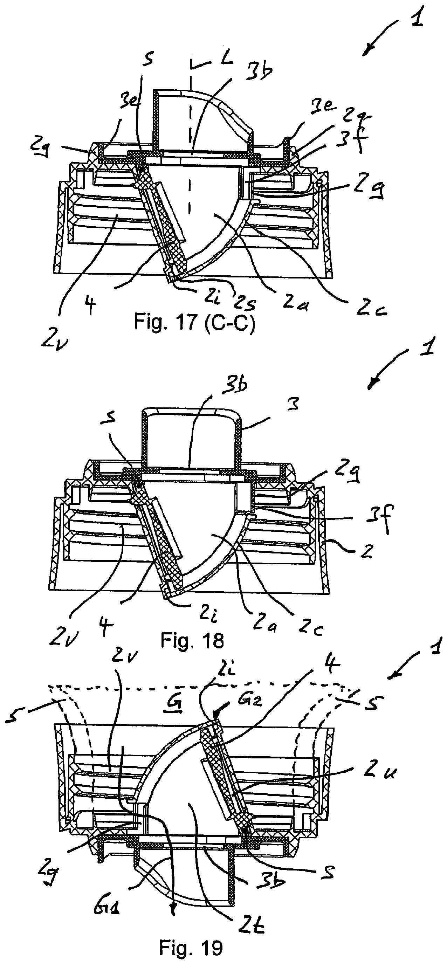

Die Figuren 15 und 16 zeigen eine Frontansicht der Steuerkammereinlassöffnung 2g, wobei diese in Figur 15 eine vollständig geöffnete Durchlassöffnung ausbildet. In Figur 16 ist durch ein Verdrehen des Einstellelementes 3 bzw. durch ein Verschieben des mit dem Einstellelement fest verbundenen Einstellelementverschlusses 3f in Bewegungsrichtung H die Steuerkammereinlassöffnung 2g teilweise bedeckt, sodass eine kleinere Durchlassöffnung ausgebildet wird, durch welche ein Fluid bzw. die fliessfähige Substanz strömen kann. In einer vorteilhaften Ausgestaltung ist das Einstellelement 3 drehbar in der Kappe 2 gelagert, sodass die Grösse der Durchlassöffnung abhängig von der gewünschten Dosiermenge verstellt werden kann. Figur 17 zeigt in einem Längsschnitt der Dosiervorrichtung 1 entlang der Schnittlinie C-C eine vollständig geöffnete Durchlassöffnung, bei welcher die Steuerkammereinlassöffnung 2g, wie in Figur 15 dargestellt, nicht durch den Einstellelementverschluss 3f bedeckt wird, sodass in Figur 17 nur die Stirnseite des Einstellelementverschlusses 3f sichtbar ist, sowie die unbedeckte Steuerkammereinlassöffnung 2g. Figur 18 zeigt einen weiteren Längsschnitt durch die Dosiervorrichtung 1, bei welcher das Einstellelement 3 sowie deren Einstellelementverschluss 3f wie in Figur 16 dargestellt verdreht ist, sodass, wie in Figur 18 dargestellt, der im Schnitt dargestellte Einstellelementverschluss 3f die Steuerkammereinlassöffnung 2g an der Stelle des Schnittes bedeckt.

Das Verfahren zum dosierten Ausgeben einer sich in einem Behälter 5 befindlichen fliessfähigen Substanz G, insbesondere einer Flüssigkeit, mit Hilfe der erfindungsgemässen Dosiervorrichtung 1 wird nachfolgend an Hand der Figuren 17 bis 21 mit einer sich im Behälter 5 befindlichen Flüssigkeit G im Detail erläutert, wobei der mit der Dosiervorrichtung 1 verbundene Behälter 5 nur in Figur 19 angedeutet dargestellt ist, und in den Figuren 17, 18, 20 und 21 nicht dargestellt ist. Die Figuren 17 und 18 zeigen die Dosiervorrichtung 1 in aufrechter Stellung, wobei der nicht dargestellte, mit der Dosiervorrichtung 1 verbundene Behälter 5 sich ebenfalls in aufrechter Stellung befindet. In einem ersten, optionalen Schritt kann die von der Dosiervorrichtung 1 abzugebende Menge der fliessfähigen Substanz durch ein Verdrehen des Einstellelementes 3 eingestellt werden, um dadurch die für die fliessfähige Substanz an der Steuerkammereinlassöffnung 2g zur Verfügung stehende Fläche der Durchlassöffnung einzustellen. Vorzugsweise wird der optionale erste Schritt nur ein einziges Mal durchgeführt. In den Figuren 19 bis 21 verbleibt das Einstellelement 3 in der in Figur 17 dargestellten Grundstellung. Zur Abgabe einer Dosis der fliessfähigen Substanz G wird der Behälter 5 mit daran befestigter Dosiervorrichtung 1 um eine horizontale Achse gedreht beziehungsweise gestürzt, sodass die Dosiervorrichtung 1 nach unten ausgerichtet wird und beispielsweise um einen Winkel von 180° gedreht wird, wie in den Figuren 19 bis 21 dargestellt. Falls der Behälter nicht elastisch verformbar ist, beziehungsweise falls auf den elastisch verformbaren Behälter von Aussen kein Druck ausgeübt wird, so ist es zum Ausgiessen erforderlich, den Behälter 5 mit daran befestigter Dosiervorrichtung 1 ausgehend von der vertikalen, in Figur 17 und 18 dargestellten Anordnung um einen Winkelbereich zwischen 90 ° und 270° zu drehen, damit die Dosiervorrichtung 1 zumindest horizontal ausgerichtet wird, und vorzugsweise nach unten verlaufend ausgerichtet wird. Die in den Figuren 19 bis 21 dargestellte Lage ist insbesondere dann vorteilhaft, wenn sich nur noch eine geringe Restmenge der fliessfähigen Substanz bzw. der Flüssigkeit G im Behälter 5 befindet.

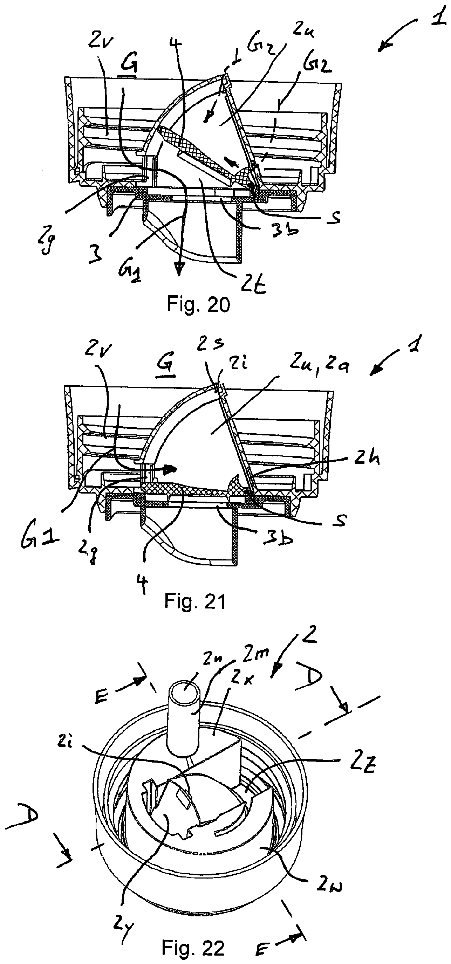

Das Ausgeben einer dosierten Menge der Flüssigkeit G erfolgt nun wie in den Figuren 19 bis 21 dargestellt. Das in der Steuerkammer 2a angeordnete, um die Schwenkachse S schwenkbare Schliessteil 4 unterteilt den Innenraum der Steuerkammer 2a in eine Durchflusskammer 2t und eine Teilsteuerkammer 2u, wobei die Flüssigkeit G einen ersten Flüssigkeitsteilstrom G1 ausbildet, der über die Steuerkammereinlassöffnung 2g der Durchflusskammer 2t zugeleitet wird, wobei die Flüssigkeit G einen zweiten Flüssigkeitsteilstrom G2 ausbildet, der zumindest über die erste Austauschöffnung 2i der Teilsteuerkammer 2u zugeleitet wird. Der erste Flüssigkeitsteilstrom G1 strömt nach dem Eintritt in die Durchflusskammer 2t in die Ausgussöffnung 3b und wird dadurch von der Dosiervorrichtung 1 nach aussen abgegeben. Der zweite Flüssigkeitsteilstrom G2 strömt, ausgehend vom Zuführraum 2v, über die erste Austauschöffnung 2i in die Teilsteuerkammer 2u und sammelt sich dort an, wobei der einströmende zweite Flüssigkeitsteilstrom G2 zur Folge hat, dass sich die in der Teilsteuerkammer 2u befindliche Füssigkeitsmenge ansammelt und somit kontinuierlich erhöht, und das Schliessteil 4 dadurch, wie in Figur 20 dargestellt, zunehmend in Richtung zum Ausguss 3a hin verschwenkt wird. Der in die Teilsteuerkammer 2u einströmende zweite Flüssigkeitsteilstrom G2 vergrössert das Volumen der Teilsteuerkammer 2u zusehends, sodass das Schliessteil 4 so lange eine Schwenkbewegung erfährt, bis dieses an der Anschlagfläche 3h der Ausgussöffnung 3b anliegt und die Ausgussöffnung 3b dadurch durch das Schliessteil 4 geschlossen wird, sodass eine weitere Ausgabe des ersten Flüssigkeitsteilstroms G1 verhindert wird und der Fluss des ersten Flüssigkeitsteilstroms G1 somit unterbrochen wird. Das sich innerhalb der Steuerkammer 2a verschwenkende Schliessteil 4 bewegt sich während des Ausgiessens zunehmend in Richtung der Ausgussöffnung 3b, sodass die Ausgussöffnung 3b letztendlich durch das Schliessteil 4 von der Seite der Steuerkammer 2a her verschlossen wird.

Nach dem Drehen beziehungsweise nach dem Stürzen des Behälters 5 wird die Ausgussöffnung 3b zeitverzögert durch das Schliessteil 4 geschlossen, sodass die gesamte, von der Dosiervorrichtung 1 während eines Dosiervorgangs abgegebene Flüssigkeitsmenge einerseits beeinflusst wird von der Zeitdauer, bis zu welcher die Ausgussöffnung 3b vom Schliessteil 4 geschlossen wird, und andererseits von der Flüssigkeitsmenge, welche pro Zeiteinheit über die Steuerkammereinlassöffnung 2g und nachfolgend über die Ausgussöffnung 3b nach aussen fliesst und von der Dosiervorrichtung 1 abgegeben wird. Wie in den Figuren 15 und 16 dargestellt kann die freie Fläche der Steuerkammereinlassöffnung 2g über ein Verschieben des Einstellelementverschlusses 3f eingestellt werden, und somit die während eines Dosiervorgangs abgegebene Flüssigkeitsmenge. Die Zeitdauer, bis zu welcher die Ausgussöffnung 3b vom Schliessteil 4 geschlossen wird, ist von mehreren Faktoren abhängig, insbesondere von der Grösse der erste Austauschöffnung 2i und der Viskosität der Flüssigkeit G. Es kann sich, wie in den Figuren 19 bis 21 dargestellt, als vorteilhaft erweisen, zumindest noch eine weitere zweite Austauschöffnung 2h in der Steuerkammer 2a vorzusehen, durch welche ein zusätzlicher Teilstrom G2 der Flüssigkeit G in die Teilsteuerkammer 2u hineinfliessen kann, sodass sich der zweite Flüssigkeitsteilstrom G2 aus mehreren Teilströmen zusammensetzt, jeweils ein Teilstrom pro Öffnung zwischen Flüssigkeit G und Teilsteuerkammer 2u.

Nach dem Ausgeben der Flüssigkeitsdosis wird der Behälter mit der daran befestigten Dosiervorrichtung 1 wieder aufgerichtet, sodass die Dosiervorrichtung 1 beispielsweise die in Figur 1 dargestellte, vertikal nach oben ausgerichtete Stellung einnimmt. Unmittelbar nach dem Aufrichten befindet sich das Schliessteil 4 noch in der in Figur 21 dargestellten Stellung. Nach dem Aufrichten der Dosiervorrichtung 1 fliesst die in der Teilsteuerkammer 2u befindliche Flüssigkeit über die erste Austauschöffnung 2i und/oder die zweite Austauschöffnung 2h zurück in den Zuführraum 2v, sodass die Teilsteuerkammer 2u zunehmend verkleinert wird und dadurch die Durchflusskammer 2t vergrössert wird, bis die gesamte sich in der Teilsteuerkammer 2u befindliche Flüssigkeit ausgeflossen ist, und sich das Schliessteil 4 wiederum in der in Figur 17 dargestellten Ausgangsposition befindet. Danach ist die Dosiervorrichtung 1 bereit für die Abgabe einer weiteren, dosierten Flüssigkeitsmenge, indem der Behälter 5 mit daran befestigter Dosiervorrichtung 1 bereit ist wieder gestürzt zu werden.

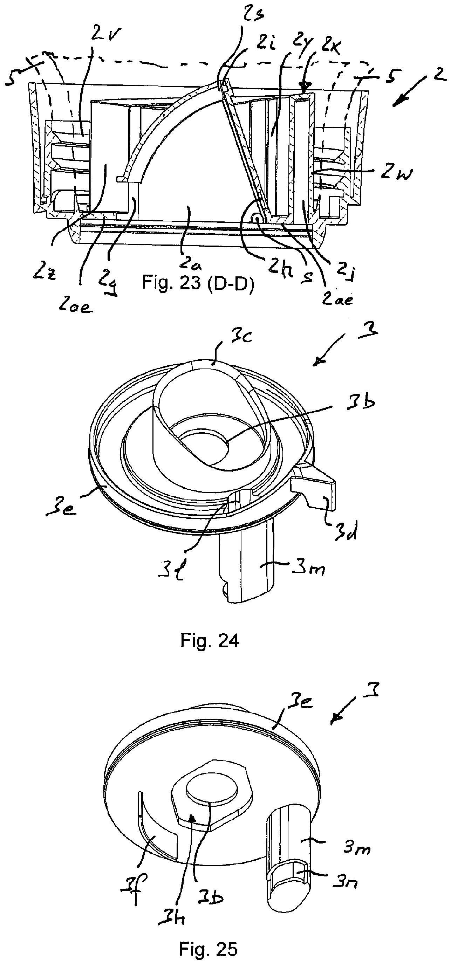

Figur 22 zeigt eine perspektivische Ansicht und Figur 23 einen Längsschnitt entlang der Linie D-D eines weiteren Ausführungsbeispiels einer Kappe 2. Im Unterschied zu der in den Figuren 6 bis 10 dargestellten Kappe 2 umfasst die in den Figuren 22 und 23 dargestellte Kappe 2 einen Hohlkörper 2j, der insbesondere eine Hohlkörperaussenwand 2w und eine Hohlkörperstirnseite 2x umfasst, welche derart angeordnet sind, dass in der Kappe 2 ein erster Sammelbereich 2y und ein zweiter Sammelbereich 2z ausgebildet ist. Dieser Hohlkörper 2j beziehungsweise der dadurch ausgebildete erste und zweite Sammelbereich 2y, 2z stellt sicher, dass die Funktion der Dosiervorrichtung auch dann noch gewährleistet ist, wenn sich eine geringe Restmenge an Flüssigkeit im Behälter 5 befindet. In Figur 23 ist der Behälter 5 angedeutet dargestellt. Die Anordnung des Hohlkörpers 2j hat zur Folge, dass der Zuführraum 2v der Kappe 2 wesentlich verkleinert ist, beziehungsweise dass sich die im Behälter befindliche Flüssigkeit im Wesentlichen im ersten und zweiten Sammelbereich 2y, 2z ansammelt, sodass eine Dosierung der abgegebenen Flüssigkeitsmenge auch bei geringer Restmenge an Flüssigkeit möglich ist, indem immer noch genügend Flüssigkeit zur Verfügung steht, welche über die erste Austauschöffnung 2i und/oder die zweite Austauschöffnung 2h in die nicht dargestellte Durchflusskammer 2t der Steuerkammer 2a hineinfliessen kann, und welche über die Steuerkammereinlassöffnung 2g und das nicht dargestellte Einstellelement 3 mit Ausgussöffnung 3b abfliessen kann.

Die dargestellten Ausführungsbeispiele zeigen die Steuerkammer 2 in einer möglichen Ausführungsform. Die Steuerkammer 2 und das bezüglich der Form der Steuerkammer 2a angepasste Schliessteil 4 können in einer Vielzahl von Formen ausgestaltet sein, derart, dass das Schliessteil 4 in der Kappe 2 drehbar gelagert ist und den Innenraum der Steuerkammer 2 in eine Durchflusskammer 2t und eine Teilsteuerkammer 2u unterteilt. So könnten die erste und die zweite Seitenwand 2d, 2e beispielsweise nicht flach, sondern bauchig in Drehrichtung der Schwenkachse S verlaufend ausgestaltet sein. Die Stirnseite 4f könnte beispielsweise eckig, zackenförmig, oder abschnittweite sternförmig ausgestaltet sein, wobei die zweite Begrenzungswand 2c gegengleich zur Stirnseite 4f ausgestaltet ist, sodass zwischen Stirnseite 4f und Begrenzungswand 2c nur ein geringer Spalt ausgebildet wird.

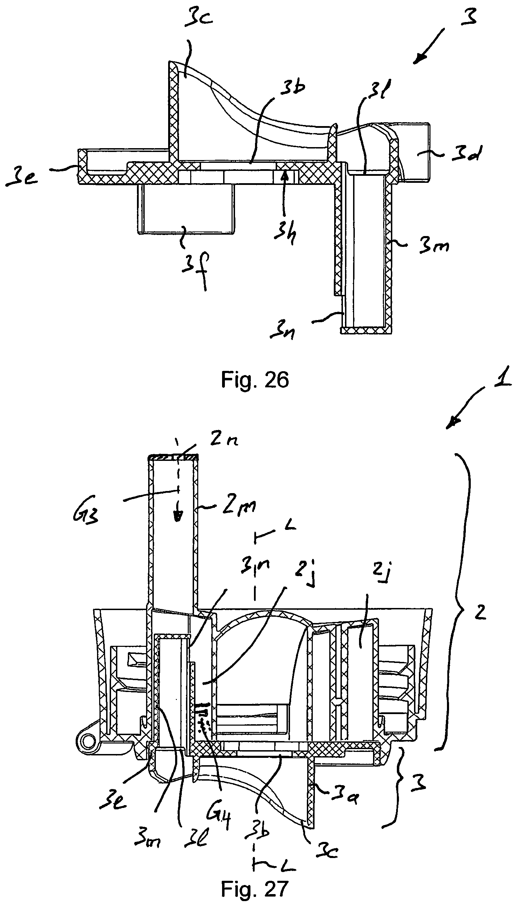

Die Figuren 24 bis 26 zeigen ein weiteres Ausführungsbeispiel eines Einstellelements 3, das, im Unterschied zu dem in den Figuren 10 bis 12 dargestellten Einstellelement 3, keine längliche, in Umfangsrichtung verlaufende Belüftungsöffnung 3g aufweist, dafür ein Belüftungsrohr 3m mit einer zweiten Belüftungseintrittsöffnung 31 und einer zweiten Belüftungsaustrittsöffnung 3n. Das Einstellelement 3 gemäss der Figuren 24 bis 26 ist insbesondere vorteilhaft geeignet zur Kombination mit der in den Figuren 22, 23 und 27 dargestellten Kappe 2. Figur 27 zeigt ein an der Kappe 2 drehbar befestigtes Einstellelement 3, wobei das Einstellelement 3 keinen Zeiger 3d aufweist, ansonsten jedoch wie in den Figuren 24 bis 26 dargestellt ausgestaltet ist. Das Einstellelement 3 kann beispielsweise verdreht werden indem der Ausguss 3a mit den Fingern verdreht wird. Der Ausguss 3a könnte in Verlaufsrichtung der Längsachse L auch weiter vorstehend, länger und z.B. rohrförmig ausgestaltet sein, um eine noch grössere Fläche zum Betätigen durch die Finger auszubilden. Wie in Figur 27 dargestellt ist das Belüftungsrohr 3m vollständig innerhalb des Hohlraums 2j angeordnet, sodass dieses innerhalb des Hohlraums 2j in Längsrichtung L verläuft. Das Einstellelement 3 ist über das zweite Führungsteil 3e um die Längsachse L drehbar im ersten Führungsteil 2q der Kappe 2 gelagert, wobei das Belüftungsrohr 3m ebenfalls innerhalb des Hohlraums 2j in Umfangsrichtung H bewegt werden kann. Die in Figur 27 dargestellte Anordnung weist insbesondere den Vorteil auf, dass die während des Ausgiessens allenfalls durch die Belüftungsaustrittsöffnung 2n und das Belüftungsrohr 2m rückströmende fliessfähige Substanz G₃ unten im Hohlraum 2j als zurückgehaltene Substanz G₄ gesammelt wird, und somit nicht über das Belüftungsrohr 3m ausgegeben wird. Solange der Pegel der zurückgehaltenen Substanz G₄ nicht bis zur Höhe der zweiten Belüftungsaustrittsöffnung 3n ansteigt kann ein Ausfliessen über das Belüftungsrohr 3m verhindert werden. Es kann somit verhindert werden, dass während dem Dosieren eine fliessfähige Substanz aus dem Behälter 5 beziehungsweise aus dem Zuführraum 2v unkontrolliert von der Dosiervorrichtung 1 abgegeben wird, was die Genauigkeit der wiederholt gleich grossen, abgegebenen Menge an fliessfähiger Substanz wesentlich erhöht. Über die Grösse der Belüftungsaustrittsöffnung 2n sowie auch über die Zeitdauer, während welcher der Behälter sich in gestürzter Lage befindet, kann die Menge der allenfalls rückströmenden Substanz G₃ beeinflusst werden. Diese Parameter werden vorzugsweise derart gewählt, dass der Pegel der Substanz G₄ während dem Ausgiessen nicht bis zur zweiten Belüftungsaustrittsöffnung 3n ansteigt. Sobald der Behälter wieder in die aufrechte Lage zurück geschwenkt wird fliesst die zurückgehaltene Substanz G₄, falls überhaupt vorhanden, über das Belüftungsrohr 2m und die Belüftungsaustrittsöffnung 2n zurück in den Zuführraum 2v beziehungsweise in den Innenraum des Behälters 5.

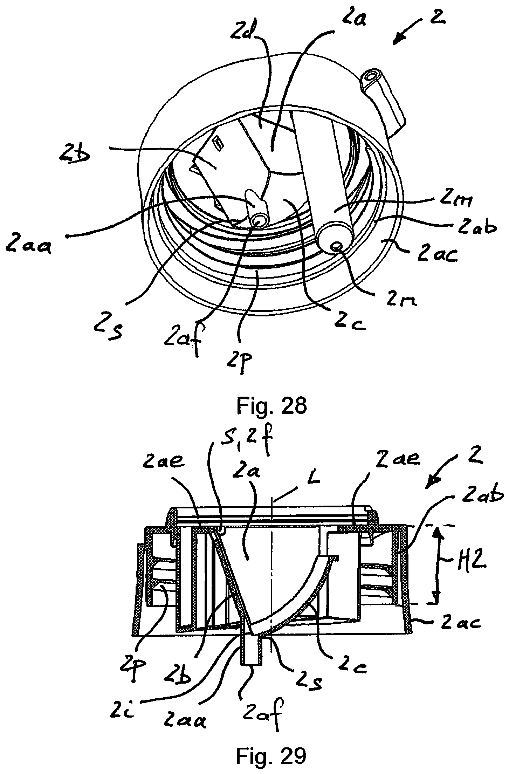

Die Figuren 28 und 29 zeigen ein weiteres Ausführungsbeispiel einer Kappe 2, welche ähnlich ausgestaltet ist wie die in den Figuren 7 und 9 dargestellte Kappe 2, weshalb nachfolgend im Wesentlichen noch die Unterschiede zu der in den Figuren 7 und 9 dargestellten Kappe 2 erläutert werden. An der Steuerkammerbasis 2s der Steuerkammer 2a ist im Bereich der ersten Austauschöffnung 2i ein Leitkanal 2aa aufweisend eine Verbindungsöffnung 2af angeordnet, wobei der Leitkanal 2aa die erste Austauschöffnung 2i und die Verbindungsöffnung 2af leitend miteinander verbindet, das heisst für eine fliessfähige Substanz leitend verbindet, sodass die fliessfähige Substanz über den Leitkanal 2aa zwischen dem Zuführraum 2v und dem Innenraum 2ad der Steuerkammer 2a hin- und herfliessen kann. Vorteilhafterweise verläuft der Leitkanal 2aa, wie in Figur 29 dargestellt, parallel zur Längsachse L, und vorzugsweise geradlinig. Der Leitkanal 2aa kann jedoch auch unter einem Winkel bezüglich der Längsachse L verlaufen, und/oder kann einen gekrümmten Verlauf aufweisen. Die Kappe 2 umfasst eine Gewindekappe 2ab mit einem Innengewinde 2p, welches auf einen Behälter aufschraubbar ist. Die Gewindekappe 2ab weist in Richtung der Längsachse L eine Höhe H2 auf. Vorzugsweise beträgt die Länge des Leitkanals 2aa zumindest 1/10 der Höhe H2, wobei die Länge insbesondere in einem Bereich von 1/3 bis 2/3 der Höhe H2 liegt. Der Leitkanal 2aa ist vorzugsweise rohrförmig ausgestaltet, besonders bevorzugt, wie in den Figuren 28 und 29 dargestellt, als Rundrohr. Der Leitkanal 2aa könnte jedoch auch andere Querschnitte aufweisen, beispielweise quadratisch, rechteckig oder oval. Der Innendurchmesser des Leitkanals 2aa beträgt vorzugsweise zwischen 1 mm und 5 mm. Innerhalb des Leitkanals 2aa weist die fliessfähige Substanz ein vorteilhaftes Strömungsverhalten auf, vorzugsweise eine im Wesentlichen laminare Strömung. Der Leitkanal 2aa weist den Vorteil auf, dass der Austausch der fliessfähigen Substanz zwischen dem Zuführraum 2v und der Steuerkammer 2a reproduzierbar ist. Der Leitkanal 2aa weist somit insbesondere den Vorteil auf, dass die fliessfähige Substanz strömungstechnisch reproduzierbar aus dem Zuführraum 2v in die Steuerkammer 2a zugeleitet wird, was den Vorteil ergibt, dass die Teilsteuerkammer 2u reproduzierbar befüllt wird, und somit die während eines Ausgiessvorgangs von der Kappe 2 abgegebene Menge an fliessfähiger Substanz vorzugsweise besonders genau reproduzierbar ist, sodass nacheinander folgende Ausgiessvorgänge an fliessfähiger Substanz dieselbe oder im Wesentlichen dieselbe Menge aufweisen. Der Leitkanal 2aa ist besonders vorteilhaft als ein Rundrohr ausgestaltet, besonders vorteilhaft in Richtung der Längsachse L verlaufend. Der Leitkanal 2aa erhöht somit vorzugsweise die Reproduzierbarkeit der jeweils ausgegossenen Abgabemenge der sich im Behälter 5 befindlichen fliessfähigen Substanz, beispielsweise ein Fluid, welches während nacheinander folgenden Ausgiessvorgängen abgegeben wird. Die in den Figuren 28 und 29 dargestellte Ausführungsform weist zudem den Vorteil auf, dass die während eines Ausgiessvorgangs ausgegossene Abgabemenge an fliessfähiger Substanz auch dann vorzugsweise reproduzierbar genau der vorgesehenen Abgabemenge entspricht, wenn die Längsachse L der Kappe 2 während des Ausgiessens nicht parallel zur Gravitationskraft bzw. zur Vertikalen verläuft, sondern schräg gehalten wird und bezüglich der Gravitationskraft einen Winkel aufweist, beispielswiese einenWinkel im Bereich zwischen 0 und 45° zwischen Gravitationskraft bzw. der Vertikalen und der Längsachse L.

In den dargestellten Ausführungsbeispielen umfasst die Kappe 2 jeweils eine Gewindekappe 2ab mit Innengewinde 2p sowie eine zusätzliche Aussenkappe 2ac. Die Gewindekappe 2ab und die Aussenkappe 2ac könnten auch gemeinsam und somit einteilig ausgestaltet sein.

Sofern der Behälter elastisch verformbar ist könnte bei der Dosiervorrichtung 1 auf das Belüftungsrohr 2m und/oder das Belüftungsrohr 3m verzichtet werden.

Die Dosiervorrichtung 1 könnte auch derart ausgestaltet sein, dass diese nur eine fest eingestellte Dosiermenge an Flüssigkeit abgibt. Dazu könnte beispielsweise das Einstellelement 3 derart mit der Dosiervorrichtung 1 verbunden sein, dass das Einstellelement 3 nicht verdrehbar ist, sondern fest bezüglich der Dosiervorrichtung 1 angeordnet ist, sodass die freie Durchtrittsfläche der Steuerkammereinlassöffnung 2g durch den nicht verdrehbar angeordneten Einstellelementverschluss 3f fest vorgegeben ist. Das Einstellelement 3 könnte beispielsweise mit Hilfe einer nicht dargestellten, mit der Kappe 2 zusammenwirkenden Nocke verdrehfest in der Kappe 2 angeordnet sein. Es kann sich zudem als vorteilhaft erweisen eine Mehrzahl von Einstellelementen 3 vorzusehen, welche sich zumindest durch die Anordnung der Einstellelementverschlüsse 3f unterscheiden, um je nach gewähltem Einstellelement 3 eine unterschiedlich grosse, freie Durchtrittsfläche auszubilden, sodass, abhängig von der jeweils gewünschten Dosiermenge, das entsprechende Einstellelement 3 an der Kappe 2 befestigt wird.

In einer weiteren möglichen Ausführungsform könnte beim Einstellelement 3 auf das Begrenzungselement 3f verzichtet werden, indem die Steuerkammereinlassöffnung 3g eine fest vorgegebene freie Durchtrittsfläche aufweist, welche entsprechend der vorgesehenen, anzugebenden Dosiermenge angepasst ist. Bei dieser Ausführungsform hätte das Einstellelement 3 nur noch den Zweck die Stirnseite der Kappe 2 abzudecken und die Ausgussöffnung 3b mit Ausguss 3a auszubilden, und allenfalls zusätzlich noch die optionale Belüftungsöffnung 3g oder das optionale Belüftungsrohr 3m mit Belüftungseingangsöffnung 21 und Bellüftungsaustrittsöffnung 2n auszubilden.

In einer vorteilhaften Ausgestaltung umfasst das Schliessteil 4, wie in Figur 14 dargestellt, einen vorzugsweise dornförmigen Fortsatz 4i, der, abhängig von der Stellung des Schliessteils 4, in die zweite Austauschöffnung 2h eingreift. Abhängig von der Flüssigkeit, welche sich im Behälter 5 befindet, besteht die Gefahr, dass sich an der zweite Austauschöffnung 2h eine Blase bzw. eine dünne Flüssigkeitshaut bildet, was ein Fliessen der Flüssigkeit durch die zweite Austauschöffnung 2h behindert. Die Aufgabe des Fortsatzes 4i ist sicherzustellen, dass sich keine solche Blase ausbildet, beziehungsweise, falls sich eine derartige Blase gebildet hat, dass diese durch den in die zweite Austauschöffnung 2h eindringenden Fortsatz 4i zerstört wird. Der Fortsatz 4i kann in einer Vielzahl von Formen ausgestaltet sein, vorzugsweise spitzförmig.

Das in den Figuren dargestellte Einstellelement 3 ist in den dargestellten Ausführungsformen als Drehteil dargestellt, welches in Umfangsrichtung einer Längsachse gedreht wird. Das Einstellelement 3 könnte jedoch auch als Drehteil ausgestaltet sein, das um eine von der Längsachse abweichende Achse drehbar gelagert ist. Zudem könnte das Einstellelement 3 auch linear beweglich ausgestaltet sein, sodass dieses linear beweglich in der Kappe 2 gelagert ist, wobei dieser linear bewegliche Einstellelementverschluss 3f die Steuerkammereinlassöffnung 2g einstellbar bedecken kann, und dadurch die zum Ausgiessen verfügbare Öffnungsfläche der Steuerkammereinlassöffnung 2g bestimmt.

## Patentansprüche

1. Dosiervorrichtung (1) zur Abgabe einer fliessfähigen Substanz, umfassend:
- eine Kappe (2) aufweisend eine Längsachse (L) und aufweisend einen Zuführraum (2v), der Fluid leitend mit einem Behälter (5) oder einer Zufuhr (6) verbindbar ist,
- eine Steuerkammer (2a) mit einer ersten Austauschöffnung (2i) sowie einer Steuerkammereinlassöffnung (2g),
- ein Schliessteil (4),
- sowie eine Ausgussöffnung (3b),
wobei die erste Austauschöffnung (2i), die Steuerkammereinlassöffnung (2g) und die Ausgussöffnung (3b) in Richtung der Längsachse (L) nacheinander folgend angeordnet sind,
wobei die Steuerkammer (2a) einen Innenraum (2ad) ausbildet innerhalb welchem das Schliessteil (4) angeordnet ist, wobei das Schliessteil (4) um eine Schwenkachse (S) drehbar gelagert ist, wobei das Schliessteil (4) den Innenraum der Steuerkammer (2a) in eine Durchflusskammer (2t) und eine Teilsteuerkammer (2u) unterteilt, wobei die Durchflusskammer (2t) leitend mit der Ausgussöffnung (3b) verbunden ist, wobei der Zuführraum (2v) über die erste Austauschöffnung (2i) leitend mit der Teilsteuerkammer (2u) verbunden ist, und wobei der Zuführraum (2v) über die Steuerkammereinlassöffnung (2g) , abhängig von der Stellung des Schliessteils (4), entweder mit der Durchflusskammer (2t) oder mit der Teilsteuerkammer (2u) leitend verbunden ist, und wobei das Schliessteil (4) bis zu einer Stellung drehbar ist, bei welcher die Ausgussöffnung (3b) durch das Schliessteil (4) verschlossen ist, was ein weiteres Austreten der fliessfähigen Substanz verhindert.

2. Dosiervorrichtung nach Anspruch 1, **dadurch gekennzeichnet, dass** das Schliessteil (4) die Ausgussöffnung (3b) von der Seite der Steuerkammer (2a) her verschliesst.

3. Dosiervorrichtung nach Anspruch 2, **dadurch gekennzeichnet, dass** die Schwenkachse (S) senkrecht zur Längsachse (L) verläuft, und dass die Schwenkachse (S) in Verlaufsrichtung der Längsachse (L) zwischen der Steuerkammer (2a) und der Ausgussöffnung (3b) angeordnet ist.

4. Dosiervorrichtung nach einem der vorhergehenden Ansprüche, **dadurch gekennzeichnet, dass** diese ein Einstellelement (3) mit einem Begrenzungselement (3f) umfasst, wobei das Begrenzungselement (3f) eine freie Querschnittsfläche der Steuerkammereinlassöffnung (2g) bestimmt.

5. Dosiervorrichtung nach einem der vorhergehenden Ansprüche, **dadurch gekennzeichnet, dass** die Steuerkammer (2a) eine Steuerkammerbasis (2s) umfasst, bei welcher die erste Austauschöffnung (2i) angeordnet ist, und dass die Steuerkammer (2a) Steuerkammerwände (2b,2c,2d,2e) umfasst, die sich, ausgehend von der Steuerkammerbasis (2s), in Richtung zur Ausgussöffnung (3b) erstrecken, wobei in zumindest einer der Steuerkammerwände (2b,2c,2d,2e) zur Ausgussöffnung (3b) hin die Steuerkammereinlassöffnung (2g) angeordnet ist.

6. Dosiervorrichtung nach Anspruch 4, **dadurch gekennzeichnet, dass** das Einstellelement (3) um die Längsachse (L) drehbar an der Kappe (2) gelagert ist.

7. Dosiervorrichtung nach Anspruch 6, **dadurch gekennzeichnet, dass** die Kappe (2) ausgehend von der Steuerkammereinlassöffnung (2g) einen konzentrisch zur Längsachse (L) verlaufenden Seitenraum (2k) zur Aufnahme des Begrenzungselementes (3f) aufweist.

8. Dosiervorrichtung nach einem der vorhergehenden Ansprüche, **dadurch gekennzeichnet, dass** die Dosiervorrichtung (1) eine bevorzugte Ausgiessrichtung (F) aufweist, und dass sich die Ausgiessrichtung (F) und die Schwenkachse (S) unter einem Winkel (α) im Bereich von zwischen 5° und 90° schneiden, und insbesondere zwischen 5° und 30° schneiden.

9. Dosiervorrichtung nach einem der vorhergehenden Ansprüche, **dadurch gekennzeichnet, dass** die Steuerkammer (2a) ein Teil der Kappe (2) ist, und dass die Kappe (2) einteilig ausgestaltet ist.

10. Dosiervorrichtung nach einem der vorhergehenden Ansprüche, **dadurch gekennzeichnet, dass** eine Steuerkammerwand (2b) als eine in Richtung der Schwenkachse (S) verlaufende ebene Steuerkammerwand (2b) ausgestaltet ist, an welcher das Schliessteil (4) anliegt, wenn die Durchflusskammer (2t) leer oder weitgehend leer ist.

11. Dosiervorrichtung nach Anspruch 10, **dadurch gekennzeichnet, dass** die ebene Steuerkammerwand (2b) zur Schwenkachse (S) hin eine zweite Austauschöffnung (2h) aufweist.

12. Dosiervorrichtung nach Anspruch 11, **dadurch gekennzeichnet, dass** das Schliessteil (4) einen Fortsatz (4i) aufweist, welcher zum Eingriff in die zweite Austauschöffnung (2h) angeordnet ist.

13. Dosiervorrichtung nach einem der Ansprüche 10 bis 12, **dadurch gekennzeichnet, dass** die Steuerkammer (2a) die ebene Steuerkammerwand (2b), zwei gegenseitig beabstandete, parallel zur Längsachse (L) verlaufende Steuerkammerwände (2d, 2e) sowie eine konzentrisch zur Schwenkachse (S) verlaufende gekrümmte Seitenwand (2c) aufweist, welche den Innenraum der Steuerkammer (2a) begrenzen.

14. Dosiervorrichtung nach einem der vorhergehenden Ansprüche, **dadurch gekennzeichnet, dass** die Kappe (2) einen in den Zuführraum (2v) vorstehenden, gegenüber dem Zuführraum (2v) Fluid dichten Hohlraum (2j) aufweist, um das Volumen des Zuführraums (2v) zu verkleinern.

15. Dosiervorrichtung nach Anspruch 14, **dadurch gekennzeichnet, dass** die Kappe (2) ein erstes Belüftungsrohr (2m) umfasst mit einer Belüftungseintrittsöffnung (21) und einer Belüftungsaustrittsöffnung (2n), wobei das erste Belüftungsrohr (2m) in Richtung der Längsachse (L) verläuft, wobei die Belüftungseintrittsöffnung (21) in den Hohlraum (2j) mündet, wobei das Einstellelement (3) ein zweites Belüftungsrohr (3m) umfasst, mit einer zweiten Belüftungseintrittsöffnung (31) und einer zweiten Belüftungsaustrittsöffnung (3n), wobei die zweite Belüftungseintrittsöffnung (31) an einer Aussenoberfläche der Kappe (2) mündet, und wobei die zweite Belüftungsaustrittsöffnung (3n) bis in den Hohlraum (2j) hinein verläuft.

16. Dosiervorrichtung nach Anspruch 1, **dadurch gekennzeichnet, dass** an der Steuerkammerbasis (2s) der Steuerkammer (2a) ein Leitkanal (2aa) aufweisend eine Verbindungsöffnung (2af) angeordnet ist, wobei der Leitkanal (2aa) die erste Austauschöffnung (2i) und die Verbindungsöffnung (2af) leitend verbindet.

17. Dosiervorrichtung nach Anspruch 16, **dadurch gekennzeichnet, dass** der Leitkanal (2aa) in Richtung der Längsachse (L) verläuft.

18. Dosiervorrichtung nach Anspruch 16 oder 17, **dadurch gekennzeichnet, dass** der Leitkanal (2aa) rohrförmig ausgestaltet ist.

19. Verfahren zur Abgabe einer fliessfähigen Substanz aus einem Behälter (5) oder einer Zufuhr (6), wobei eine Dosiervorrichtung (1) umfassend eine Kappe (2) und eine Steuerkammer (2a) mit dem Behälter (5) oder der Zufuhr (6) verbunden wird, wobei ein schwenkbares Schliessteil (4) in der Steuerkammer (2a) angeordnet ist, welches den Innenraum der Steuerkammer (2a) in eine Durchflusskammer (2t) und eine Teilsteuerkammer (2u) unterteilt,
- indem die zugeführte, fliessfähige Substanz während dem Ausgeben über eine Steuerkammereinlassöffnung (2g) der Durchflusskammer (2t) zugeführt wird und anschliessend zur Ausgabe einer Ausgussöffnung (3b) zugeführt wird,
- indem ein Teil der sich im Behälter (5) oder der Zufuhr (6) befindlichen fliessfähigen Substanz der Teilsteuerkammer (2u) zugeführt wird, sodass das mit der fliessfähigen Substanz gefüllte Volumen der Teilsteuerkammer (2u) zunimmt und dadurch das Schliessteil (4) so lange geschwenkt wird, bis dieses an der Ausgussöffnung (3b) anliegt, und dadurch die Ausgabe der fliessfähigen Substanz unterbrochen wird.

20. Verfahren nach Anspruch 19, **dadurch gekennzeichnet, dass** mit Hilfe eines Begrenzungselementes (3f) eine freiliegende Querschnittsfläche der Steuerkammereinlassöffnung (2g) verändert wird, und dadurch die von der Dosiervorrichtung (1) abgegebene Menge fliessfähiger Substanz bestimmt wird.

21. Verfahren nach einem der Ansprüche 19 oder 20, **dadurch gekennzeichnet, dass** das während dem Ausgeben der fliessfähigen Substanz in die Teilsteuerkammer (2u) hineinfliessende Volumen pro Zeiteinheit durch die Grösse der ersten Austauschöffnung (2i) bestimmt wird.

22. Verfahren nach einem der Ansprüche 19 oder 20, **dadurch gekennzeichnet, dass** die während dem Ausgeben der fliessfähigen Substanz benötigte Zeit, um das Schliessteil (4) von einer Ausgangsstellung zu einer Endstellung zu verschwenken, durch die Grösse der ersten Austauschöffnung (2i) bestimmt wird.

## Claims

1. A dosing device (1) for dispensing a flowable substance comprising:
- a cap (2) having a longitudinal axis (L) and having a supply chamber (2v) fluidly connectable to a container (5) or a supply (6),
- a control chamber (2a) with a first exchange opening (2i) as well as a control chamber inlet opening (2g),
- a closing part (4),
- and a discharge opening (3b), wherein the first exchange opening (2i), the control chamber inlet opening (2g) and the discharge opening (3b) are arranged successively in the direction of the longitudinal axis (L), wherein the control chamber (2a) forms an inner space (2ad) within which the closing part (4) is arranged, wherein the closing part (4) is rotatably mounted about a pivot axis (S), wherein the closing part (4) divides the interior space of the control chamber (2a) into a flow chamber (2t) and a partial control chamber (2u), wherein the flow chamber (2t) is conductively connected to the discharge opening (3b), the feed chamber (2v) being conductively connected to the partial control chamber (2u) via the first exchange opening (2i), and the feed chamber (2v) being connected either to the flow chamber (2t) or to the partial control chamber (2u) via the control chamber inlet opening (2g), depending on the position of the closing part (4), either to the flow chamber (2t) or to the partial control chamber (2u), depending on the position of the closing part (4), and wherein the closing part (4) is rotatable up to a position in which the discharge opening (3b) is closed by the closing part (4), which prevents further leakage of the flowable substance.

2. Dosing device according to claim 1, **characterized in that** the closing part (4) closes the discharge opening (3b) from the side of the control chamber (2a).

3. Dosing device according to claim 2, **characterised in that** the pivot axis (S) runs perpendicular to the longitudinal axis (L) and that the pivot axis (S) is arranged between the control chamber (2a) and the discharge opening (3b) in the direction of the longitudinal axis (L).

4. Dosing device according to one of the preceding claims, **characterized in that** it comprises an adjusting element (3) with a limiting element (31), which limiting element (31) determines a free cross-sectional area of the control chamber inlet opening (2g).

5. Dosing device according to any one of the preceding claims, **characterized in that** the control chamber (2a) comprises a control chamber base (2s) at which the first exchange opening (2i) is arranged, and that the control chamber (2a) comprises control chamber walls (2b, 2c,2d,2e) which, starting from the control chamber base (2s), extend in the direction of the discharge opening (3b), the control chamber inlet opening (2g) being arranged in at least one of the control chamber walls (2b,2c,2d,2e) towards the discharge opening (3b).

6. Dosing device according to claim 4, **characterised in that** the adjusting element (3) is rotatably mounted on the cap (2) about the longitudinal axis (L).

7. Dosing device according to claim 6, **characterised in that** the cap (2) has, starting from the control chamber inlet opening (2g), a side space (2k) extending concentrically to the longitudinal axis (L) for receiving the limiting element (3f).

8. Dosing device according to one of the preceding claims, **characterised in that** the dosing device (1) has a preferred pouring direction (F) and that the pouring direction (F) and the pivot axis (S) intersect at an angle (α) in the range of between 5° and 90°, and in particular between 5° and 30°.

9. Dosing device according to one of the preceding claims, **characterised in that** the control chamber (2a) is part of the cap (2) and that the cap (2) is made in one piece.

10. Dosing device according to one of the preceding claims, **characterised in that** a control chamber wall (2b) is designed as a flat control chamber wall (2b) extending in the direction of the pivot axis (S), against which the closing part (4) rests when the flow chamber (2t) is empty or largely empty.

11. Dosing device according to claim 10, **characterised in that** the flat control chamber wall (2b) has a second exchange opening (2h) towards the pivot axis (S).

12. Dosing device according to claim 11, **characterised in that** the closing part (4) has an extension (4i) which is arranged for engagement in the second exchange opening (2h) .

13. Dosing device according to one of the claims 10 to 12, **characterised in that** the control chamber (2a) has the flat control chamber wall (2b), two mutually spaced control chamber walls (2d, 2e) running parallel to the longitudinal axis (L) and a curved side wall (2c) running concentrically to the pivot axis (S), which delimit the interior space of the control chamber (2a).

14. Dosing device according to one of the preceding claims, **characterised in that** the cap (2) has a cavity (2j) which projects into the feed chamber (2v) and is fluid-tight with respect to the feed chamber (2v) in order to reduce the volume of the feed chamber (2v).

15. Dosing device according to claim 14, **characterized in that** said cap (2) comprises a first aeration tube (2m) having an aeration inlet opening (21) and an aeration outlet opening (2n), said first aeration tube (2m) extending in the direction of said longitudinal axis (L), said aeration inlet opening (21) opening into said cavity (2j), wherein the adjusting element (3) comprises a second aeration tube (3m) having a second aeration inlet opening (31) and a second aeration outlet opening (3n), wherein the second aeration inlet opening (31) opens at an outer surface of the cap (2), and wherein the second aeration outlet opening (3n) extends into the cavity (2j).

16. Dosing device according to claim 1, **characterized in that** a guide channel (2aa) having a connection opening (2af) is arranged at the control chamber base (2s) of the control chamber (2a), the guide channel (2aa) conductively connecting the first exchange opening (2i) and the connection opening (2af).

17. Dosing device according to claim 16, **characterised in that** the guide channel (2aa) extends in the direction of the longitudinal axis (L).

18. Dosing device according to claim 16 or 17, **characterised in that** the guide channel (2aa) is tubular.

19. Method for dispensing a flowable substance from a container (5) or a supply (6), wherein a dosing device (1) comprising a cap (2) and a control chamber (2a) is connected to the container (5) or the supply (6), wherein a pivotable closing part (4) is arranged in the control chamber (2a), which divides the interior of the control chamber (2a) into a flow chamber (2t) and a partial control chamber (2u),
- in that the supplied flowable substance is supplied to the flow chamber (2t) via a control chamber inlet opening (2g) during dispensing and is then supplied to a discharge opening (3b) for dispensing,
- by supplying a portion of the flowable substance in the container (5) or the supply (6) to the partial control chamber (2u) so that the volume of the partial control chamber (2u) filled with the flowable substance increases, thereby pivoting the closing member (4) until it abuts the discharge opening (3b) and thereby interrupting the discharge of the flowable substance.

20. Method according to claim 19, **characterized in that** an exposed cross-sectional area of the control chamber inlet opening (2g) is changed by means of a limiting element (31), and thereby the amount of flowable substance dispensed by the metering device (1) is determined.

21. A method according to any one of claims 19 or 20, **characterized in that** the volume per unit time flowing into the partial control chamber (2u) during dispensing of the flowable substance is determined by the size of the first exchange opening (2i).

22. Method according to one of claims 19 or 20, **characterised in that** the time required during the dispensing of the flowable substance in order to pivot the closing part (4) from a starting position to an end position is determined by the size of the first exchange opening (2i).

## Revendications

1. Dispositif de dosage (1) pour la distribution d'une substance fluide, comprenant :
- un capuchon (2) présentant un axe longitudinal (L) et comportant une chambre d'alimentation (2v) qui peut être relié par conduction de fluide à un récipient (5) ou à une alimentation (6),
- une chambre de commande (2a) avec une première ouverture d'échange (2i) ainsi qu'une ouverture d'entrée (2g) de chambre de commande,
- une pièce de fermeture (4),
- ainsi qu'une ouverture de déversement (3b), la première ouverture d'échange (2i), l'ouverture d'entrée (2g) de la chambre de commande et l'ouverture de déversement (3b) étant disposées l'une après l'autre dans la direction de l'axe longitudinal (L), la chambre de commande (2a) formant un espace intérieur (2ad) à l'intérieur duquel est disposée la pièce de fermeture (4), la pièce de fermeture (4) étant logé de manière à pouvoir tourner autour d'un axe de pivotement (S), la pièce de fermeture (4) divisant l'espace intérieur de la chambre de commande (2a) en une chambre de passage (2t) et une chambre de commande partielle (2u), la chambre de passage (2t) étant reliée de manière conductrice à l'ouverture de déversement (3b), la chambre d'alimentation (2v) étant reliée de manière conductrice à la chambre de commande partielle (2u) par la première ouverture d'échange (2i), et la chambre d'alimentation (2v) étant reliée de manière conductrice à la chambre de commande partielle (2u) par l'ouverture d'entrée (2g) de la chambre de commande, en fonction de la position de la pièce de fermeture (4), soit avec la chambre de passage (2t), soit avec la chambre de commande partielle (2u), et dans lequel la pièce de fermeture (4) peut être tourné jusqu'à une position dans laquelle l'ouverture de déversement (3b) est fermée par la pièce de fermeture (4), ce qui empêche la substance fluide de continuer à s'écouler.

2. Dispositif de dosage selon la revendication 1, **caractérisé en ce que** la pièce de fermeture (4) ferme l'ouverture de déversement (3b) du côté de la chambre de commande (2a).

3. Dispositif de dosage selon la revendication 2, **caractérisé en ce que** l'axe de pivotement (S) est perpendiculaire à l'axe longitudinal (L) et **en ce que** l'axe de pivotement (S) est disposé dans le sens de l'axe longitudinal (L) entre la chambre de commande (2a) et l'ouverture de déversement (3b) .

4. Dispositif de dosage selon l'une des revendications précédentes, **caractérisé en ce qu'**il comprend un élément de réglage (3) avec un élément de limitation (31), l'élément de limitation (31) déterminant une surface de section transversale libre de l'ouverture d'entrée (2g) de la chambre de commande.

5. Dispositif de dosage selon l'une des revendications précédentes, **caractérisé en ce que** la chambre de commande (2a) comprend une base de chambre de commande (2s) au niveau de laquelle la première ouverture d'échange (2i) est située, et **en ce que** la chambre de commande (2a) comprend des parois de chambre de commande (2b, 2c, 2d, 2e) qui s'étendent, à partir de la base de la chambre de commande (2s), en direction de l'ouverture de déversement (3b), l'ouverture d'entrée (2g) de la chambre de commande étant disposée dans au moins une des parois de la chambre de commande (2b, 2c, 2d, 2e) en direction de l'ouverture de déversement (3b) .

6. Dispositif de dosage selon la revendication 4, **caractérisé en ce que** l'élément de réglage (3) est monté sur le capuchon (2) de manière à pouvoir tourner autour de l'axe longitudinal (L).

7. Dispositif de dosage selon la revendication 6, **caractérisé en ce que** le capuchon (2) présente, à partir de l'ouverture d'entrée (2g) de la chambre de commande, un espace latéral (2k) s'étendant concentriquement à l'axe longitudinal (L) pour recevoir l'élément de limitation (3f).

8. Dispositif de dosage selon l'une des revendications précédentes, **caractérisé en ce que** le dispositif de dosage (1) présente une direction de déversement préférée (F), et **en ce que** la direction de déversement (F) et l'axe de pivotement (S) se coupent selon un angle (a) compris entre 5° et 90°, et en particulier entre 5° et 30°.

9. Dispositif de dosage selon l'une des revendications précédentes, **caractérisé en ce que** la chambre de commande (2a) fait partie du capuchon (2) et **en ce que** le capuchon (2) est conçu en une seule pièce.

10. Dispositif de dosage selon l'une des revendications précédentes, **caractérisé en ce qu'**une paroi de chambre de commande (2b) est conçue comme une paroi de chambre de commande plane (2b) s'étendant dans la direction de l'axe de pivotement (S), contre laquelle s'appuie la pièce de fermeture (4) lorsque la chambre de passage (2t) est vide ou pratiquement vide.

11. Dispositif de dosage selon la revendication 10, **caractérisé en ce que** la paroi plane (2b) de la chambre de commande présente une deuxième ouverture d'échange (2h) vers l'axe de pivotement (S).

12. Dispositif de dosage selon la revendication 11, **caractérisé en ce que** la pièce de fermeture (4) comporte un prolongement (4i) agencé pour s'engager dans la deuxième ouverture d'échange (2h).

13. Dispositif de dosage selon l'une des revendications 10 à 12, **caractérisé en ce que** la chambre de commande (2a) comprend la paroi plane (2b) de la chambre de commande, deux parois (2d, 2e) de la chambre de commande espacées l'une de l'autre et s'étendant parallèlement à l'axe longitudinal (L), ainsi qu'une paroi latérale courbe (2c) s'étendant concentriquement à l'axe de pivotement (S), qui délimitent l'espace intérieur de la chambre de commande (2a) .

14. Dispositif de dosage selon l'une des revendications précédentes, **caractérisé en ce que** le capuchon (2) présente une cavité (2j) faisant saillie dans la chambre d'alimentation (2v) et étanche aux fluides par rapport à la chambre d'alimentation (2v), afin de réduire le volume de la chambre d'alimentation (2v).

15. Dispositif de dosage selon la revendication 14, **caractérisé en ce que** le capuchon (2) comprend un premier tube d'aération (2m) comportant un orifice d'entrée d'aération (21) et un orifice de sortie d'aération (2n), le premier tube d'aération (2m) s'étendant selon l'axe longitudinal (L), l'orifice d'entrée d'aération (21) débouchant dans la cavité (2j), dans lequel l'élément de réglage (3) comprend un deuxième tube d'aération (3m), avec une deuxième ouverture d'entrée d'aération (31) et une deuxième ouverture de sortie d'aération (3n), la deuxième ouverture d'entrée d'aération (31) débouchant sur une surface extérieure du capuchon (2), et la deuxième ouverture de sortie d'aération (3n) s'étendant jusque dans la cavité (2j).

16. Dispositif de dosage selon la revendication 1, **caractérisé en ce que** sur la base (2s) de la chambre de commande (2a) est disposé un canal de guidage (2aa) présentant une ouverture de liaison (2af), le canal de guidage (2aa) reliant de manière conductrice la première ouverture d'échange (2i) et l'ouverture de liaison (2af).

17. Dispositif de dosage selon la revendication 16, **caractérisé en ce que** le canal de conduction (2aa) s'étend dans la direction de l'axe longitudinal (L).

18. Dispositif de dosage selon la revendication 16 ou 17, **caractérisé en ce que** le canal de guidage (2aa) est de forme tubulaire.

19. Procédé de distribution d'une substance fluide à partir d'un récipient (5) ou d'une alimentation (6), dans lequel un dispositif de dosage (1) comprenant un capuchon (2) et une chambre de commande (2a) est relié au récipient (5) ou
à l'alimentation (6), une pièce de fermeture pivotant (4) étant disposé dans la chambre de commande (2a), lequel divise l'espace intérieur de la chambre de commande (2a) en une chambre de passage (2t) et une chambre de commande partielle (2u),
- en ce que la substance fluide amenée est amenée pendant la distribution à la chambre de passage (2t) par une ouverture d'entrée (2g) de la chambre de commande et est ensuite amenée pour la distribution à une ouverture de déversement (3b),
- en amenant une partie de la substance fluide se trouvant dans le récipient (5) ou dans l'alimentation (6) à la chambre de commande partielle (2u), de sorte que le volume de la chambre de commande partielle (2u) rempli de la substance fluide augmente et que la pièce de fermeture (4) est ainsi pivoté jusqu'à ce qu'il soit en contact avec l'ouverture de déversement (3b) et que la distribution de la substance fluide soit ainsi interrompue.

20. Procédé selon la revendication 19, **caractérisé en ce qu'**une surface de section transversale libre de l'ouverture d'entrée (2g) de la chambre de commande est modifiée à l'aide d'un élément de limitation (31), et **en ce que** la quantité de substance fluide distribuée par le dispositif de dosage (1) est ainsi déterminée.

21. Procédé selon l'une des revendications 19 ou 20, **caractérisé en ce que** le volume par unité de temps entrant dans la chambre de commande partielle (2u) pendant la distribution de la substance fluide est déterminé par la taille de la première ouverture d'échange (2i).

22. Procédé selon l'une des revendications 19 ou 20, **caractérisé en ce que** le temps nécessaire pendant la distribution de la substance fluide pour faire pivoter la pièce de fermeture (4) d'une position initiale à une position finale est déterminé par la taille de la première ouverture d'échange (2i).
